# EUROPÄISCHE PATENTSCHRIFT

(11) **EP 4 308 807 B1**
(45) Veröffentlichungstag und Bekanntmachung des Hinweises auf die Patenterteilung: **06.05.2026**
(21) Anmeldenummer: 22710034.4
(22) Anmeldetag: 02.03.2022
(51) Int. Cl.: F02M 35/02, F02M 35/024, B01D 46/00, B01D 46/64, B01D 46/24, B01D 27/14

(54) **FILTERELEMENT UND FILTERSYSTEM**
FILTER ELEMENT AND FILTER SYSTEM
ÉLÉMENT ET SYSTÈME FILTRANTS

(30) Priorität: 17.03.2021 DE 102021106524
(43) Veröffentlichungstag der Anmeldung: 24.01.2024
(73) Patentinhaber: MANN+HUMMEL GmbH, 71636 Ludwigsburg (DE)
(72) Erfinder: LÖHL, Thomas, 74395 Mundelsheim (DE); SCHMID, Daniel, 74343 Sachsenheim (DE)
(74) Vertreter: Mann + Hummel Intellectual Property
(86) Internationale Anmeldenummer: PCT/EP2022/055216
(87) Internationale Veröffentlichungsnummer: WO 2022/194544

(56) Entgegenhaltungen:
- EP-A1- 3 403 710
- EP-A1- 3 572 138
- EP-A2- 3 003 533
- EP-B1- 3 003 533
- WO-A1-2021/071825
- DE-A1- 102013 014 507
- DE-A1- 102015 004 965
- DE-A1- 102017 005 797
- US-A1- 2009 100 813
- US-B1- 6 383 244

## Beschreibung

### Technisches Gebiet

Die Erfindung betrifft ein Filtersystem, insbesondere für Luft, insbesondere die Ansaugluft einer Brennkraftmaschine, insbesondere eines Kraftfahrzeugs. Das Filtersystem kann zur Luftfiltration für Brennstoffzellen, insbesondere als Kathodenluftfilter eingesetzt werden. Weiterhin kann das Filtersystem zusätzlich zur Adsorption von Schadgasen ausgebildet sein.

### Stand der Technik

Aus EP 3 003 533 A2 ist ein Filtersystem bekannt, bei dem ein konisches Sekundärfilterelement in das reinseitige Innere eines zylindrischen Primärfilterelements eingesetzt ist. An beiden Stirnseiten des Filterelements sind ringförmige Endscheiben angeordnet, so dass beide Seiten des Filterelements offen sind. Das Primärfilterelement dichtet axial gegen einen Gehäusedeckel ab. Die dem Gehäusedeckel zugewandte Stirnseite des Sekundärfilterelements ist geschlossen und stützt sich am Gehäusedeckel ab.

Aus DE 10 2017 005797 A1 ist ein Filtersystem nach dem Oberbegriff des Anspruch 1 bekannt.

### Offenbarung der Erfindung

Eine Aufgabe der Erfindung ist es, ein Filtersystem anzugeben, das eine Material- und Gewichtsersparnis am Gehäuse erlaubt.

Die vorgenannte Aufgabe wird nach einem Aspekt der Erfindung gelöst mit einem Filtersystem nach Anspruch 1. Das Filtersystem weist ein Gehäuse mit einem Einlass und einem Auslass für ein Fluid auf, wobei in dem Gehäuse ein erstes, als Hohlkörper - insbesondere hohlzylindrisch - ausgebildetes Filterelement mit einem Filtermedium und in einem Innenraum des ersten Filterelements ein zweites Filterelement angeordnet ist, wobei das erste Filterelement und das zweite Filterelement koaxial und konzentrisch zueinander um eine Längsachse angeordnet sind, wobei das erste Filterelement eine erste, an einer auslassseitigen Stirnseite angeordnete Endscheibe und eine zweite, an der gegenüberliegenden Stirnseite angeordnete Endscheibe aufweist, welche Endscheiben jeweils eine zentrische Öffnung aufweisen und sich im Wesentlichen ringförmig über die jeweilige Stirnseite des Filtermediums erstrecken, wobei das zweite Filterelement eine auslassseitige erste Stirnseite und eine der auslassseitigen Stirnseite gegenüberliegende zweite Stirnseite aufweist, die mit einer Abdeckung fluiddicht verschlossen ist, wobei die Öffnung in der zweiten Endscheibe des ersten Filterelements durch die Abdeckung fluiddicht verschlossen ist, wobei zwischen der zweiten Stirnseite des ersten Filterelements und der zweiten Stirnseite des zweiten Filterelements eine Dichtungsschnittstelle angeordnet ist. Über die Dichtungsschnittstelle dichten die beiden Filterelemente unmittelbar gegeneinander ab.

Günstige Ausgestaltungen und Vorteile der Erfindung ergeben sich aus den weiteren Ansprüchen, der Beschreibung und der Zeichnung.

Es wird ein Filtersystem vorgeschlagen, das ein Gehäuse mit einem Einlass und einem Auslass für ein Fluid aufweist, wobei in dem Gehäuse ein erstes, als Hohlkörper ausgebildetes Filterelement mit einem Filtermedium um eine Längsachse und in einem Innenraum des ersten Filterelements ein zweites Filterelement angeordnet ist. Die beiden Filterelemente sind koaxial und konzentrisch um eine Längsachse des ersten Filterelements angeordnet. Die Längsachse des Filterelements kann mit einer Längsachse des Filtergehäuses übereinstimmen. Die Filterelemente können aber auch bezüglich einer Gehäuseachse exzentrisch in dem Filtergehäuse angeordnet sein. Das erste Filterelement weist eine erste, an einer auslassseitigen Stirnseite angeordnete Endscheibe und eine zweite, an der gegenüberliegenden Stirnseite angeordnete Endscheibe auf, welche Endscheiben jeweils eine zentrale Öffnung aufweisen und sich im Wesentlichen ringförmig über die jeweilige Stirnseite des Filtermediums erstrecken. Das zweite Filterelement weist eine auslassseitige erste Stirnseite und eine der auslassseitigen Stirnseite gegenüberliegende zweite Stirnseite auf, die mit einer Abdeckung fluiddicht verschlossen ist. Die Öffnung in der zweiten Endscheibe ist durch die Abdeckung fluiddicht verschlossen, wobei zwischen der zweiten Stirnseite des ersten Filterelements und der zweiten Stirnseite des zweiten Filterelements eine Dichtungsschnittstelle angeordnet ist.

Die Dichtungsschnittstelle umfasst wenigstens eine Dichtfläche an einem der Filterelemente und wenigstens ein Dichtungselement an dem anderen der Filterelemente. Das Dichtungselement kann aus einem geschäumten Polymer, das auf eines der Filterelemente aufgeschäumt ist, gebildet sein oder kann aus einem angespritzten Thermoplast gebildet sein. Das geschäumte Polymer kann insbesondere ein Polyurethan sein. Hierbei kann das gleiche Material das Dichtungselement und die Endscheibe bilden. Das Dichtungselement kann alternativ ein 2-Komponenten (2K) Bauteil sein, bei dem ein thermoplastisches Elastomer an einen thermoplastischen Träger angespritzt ist, welcher an einem der Filterelemente vorhanden ist. Der Träger kann aus einem Polymer, insbesondere PP oder PA, gebildet sein. Das Dichtungselement kann auch ein insbesondere extrudiertes Dichtungselement sein, das an den Träger angeknüpft wird.

Die Dichtungsschnittstelle besteht direkt zwischen den beiden Filterelementen. Aufwändige Zusatzkomponenten können vermieden werden. Das erste Filterelement kann auch als Hauptelement und das zweite Filterelement als Sekundärelement oder Sicherheitselement bezeichnet werden. Vorzugsweise ist das Filtermedium des ersten Filterelements ein zickzackgefaltetes Filtermedium, das als Hohlkörper ausgestaltet ist. Der Hohlkörper kann zylindrisch oder konisch ausgeführt sein. Es sind verschiedene Grundflächen denkbar; vorzugsweise ist die Grundfläche kreisförmig oder oval. Im Fall eines kreiszylindrischen Filterelements sind die Endscheiben entsprechend kreisringförmig. Das Filtermedium ist vorzugsweise um ein Stützrohr angeordnet. Die Endscheiben sind vorzugsweise aus einem geschäumten Polymer gebildet, insbesondere aus einem Polyurethan. Das Gehäuse kann zweckmäßigerweise koaxial um eine Längsachse ausgebildet sein, welche mit der Längsachse des Filterelements zusammenfällt, wobei insbesondere das Gehäuse den Auslass als koaxial zur Längsachse angeordneten Stutzen aufweisen kann. Das zweite Filterelement weist seine mit der Abdeckung geschlossene Stirnseite an der dem Auslass gegenüberliegenden Seite des Gehäuses auf. Das Filtermedium des zweiten Filterelements ist vorzugsweise ein einlagig oder mehrlagig gewickeltes Filtermedium, das vorzugsweise auf einem Stützrohr angeordnet ist. Alternativ kann das Filtermedium des zweiten Filterelements ein zu einem Hohlkörper geformter Faltenbalg sein. Die Dichtungsschnittstelle ist somit auf der dem Auslass gegenüberliegenden Seite des Gehäuses angeordnet. Die Abdeckung kann einteilig mit dem Stützrohr des zweiten Filterelements ausgebildet sein und aus einem harten Kunststoff, insbesondere einem Polymer wie PP oder PA, bestehen. Insbesondere für den Fall, dass das zweite Filtermedium als Faltenbalg ausgebildet ist, kann die Abdeckung auch aus einem weichen Kunststoff, insbesondere einem geschäumten Polyurethan, gebildet sein und vorteilhaft gleichzeitig die stirnseitige Abdichtung der Falten bilden.

Das Filtersystem ist beispielsweise ein Luftfiltersystem, insbesondere ein Luftfiltersystem für eine Brennkraftmaschine, bevorzugt ein Luftfiltersystem für eine Brennkraftmaschine oder eine Brennstoffzelle eines Kraftfahrzeugs.

Gemäß einer günstigen Ausgestaltung kann die Dichtungsschnittstelle wenigstens eine Dichtfläche an einem, einem reinseitigen Auslass gegenüberliegenden Stützrohr des ersten Filterelements und wenigstens ein Dichtungselement am zweiten Filterelement umfassen, das gegen die Dichtfläche in axialer und/oder radialer Richtung dichtet.

Vorzugsweise kann das Dichtungselement direkt auf der Abdeckung oder beabstandet zu der Abdeckung am zweiten Filterelement angeordnet sein. Ferner kann das erste Filterelement an seiner Außenseite vom Gehäuse abgestützt sein.

Gemäß einer günstigen Ausgestaltung kann die Dichtungsschnittstelle ein Dichtungselement umfassen, insbesondere einen Dichtring, das an einem umlaufenden Vorsprung auf der Abdeckung angeordnet ist, welcher an einer äußeren Stirnseite der Abdeckung in axialer Richtung von der Abdeckung absteht, wobei das Dichtungselement in radialer Richtung gegen ein Stützrohr des ersten Filterelements abdichtet. Das Dichtungselement kann aus einem geschäumten Polymer, das auf oder um den Vorsprung aufgeschäumt ist, gebildet sein oder aus einem angespritzten Thermoplast gebildet sein. Das geschäumte Polymer kann insbesondere ein Polyurethan sein. Das Dichtungselement kann ein 2-Komponenten (2K) Bauteil sein, bei dem ein Thermoplast an den Vorsprung angespritzt ist.

Gemäß einer günstigen Ausgestaltung kann die Dichtungsschnittstelle ein Dichtungselement umfassen, das an einer umlaufenden Kante der Abdeckung angeordnet ist und das in radialer Richtung gegen ein Stützrohr des ersten Filterelements abdichtet. Das Dichtungselement kann vorteilhaft ein Formkörper aus einem geschäumten Polymer sein, das auf die Kante aufgeschäumt ist und mit seiner Außenfläche gegen das Stützrohr des ersten Filterelements dichtet, oder ein Thermoplast sein, der an die Kante angespritzt ist.

Gemäß einer günstigen Ausgestaltung kann die Dichtungsschnittstelle an der Stirnseite des zweiten Filterelements, insbesondere an der Abdeckung, ein Dichtungselement, insbesondere einen Dichtring oder einen Dichtungsvorsprung, umfassen, der in axialer Richtung gegen einen in radialer Richtung nach innen weisenden Rand des Stützrohrs des ersten Filterelements abdichtet. Auf der Abdeckung kann ein umlaufender Ring angeordnet sein, der in das Dichtungselement eingebettet ist, was eine stabile Verbindung von Dichtungselement und zweitem Filterelement ermöglicht. Das Dichtungselement ist vorzugsweise ein geschäumtes Polymer, insbesondere ein Polyurethan, oder ein Thermoplast. Vorteilhaft kann die Endscheibe des ersten Filterelements den nach innen weisenden Rand wenigstens teilweise überdecken. Dies erlaubt eine verbesserte Dichtigkeit zwischen Mittelrohr und Endscheibe sowie eine stabile Abstützung der Dichtfläche. Der nach radial innen weisende Rand des Stützrohrs des ersten oder äußeren Filterelements kann eine Nut aufweisen, in welche das Dichtungselement, insbesondere der Dichtungsvorsprung, eingreift. Das Dichtungselement kann in axialer Richtung gegen den Nutgrund und/oder gegen eine axiale Stirnfläche eines die Nut begrenzenden Vorsprungs dichten.

Gemäß einer günstigen Ausgestaltung kann die Dichtungsschnittstelle als Dichtungselement einen Bereich der zweiten Endscheibe des ersten Filterelements, welche einem reinseitigen Auslass in axialer Richtung gegenüberliegt, und wenigstens eine Dichtfläche an dem zweiten Filterelement umfassen. Vorteilhaft kann die Endscheibe mit einer geeigneten Form bei der Herstellung in gewünschter Weise geformt werden. Die Endscheibe kann ihre Dichtfunktion gegen das zweite Filterelement in einigen Ausgestaltungen mit oder in einigen Ausgestaltungen alternativ ohne Abstützung durch das Gehäuse leisten.

Vorteilhaft kann die zweite Endscheibe des ersten Filterelements in radialer Richtung nach innen über das Filtermedium überstehen. Dabei kann das Stützrohr zusätzlich an seinem axialen Ende beispielsweise nach innen geneigt und/oder mit einem nach innen weisenden Rand versehen sein. Damit kann die nach innen überstehende Endscheibe in diesem Bereich abgestützt und stabilisiert werden. Beispielsweise kann für den Fall, dass das Dichtungselement Teil des ersten Filterelements ist, das Stützrohr zur Versteifung eines weichen Dichtungselements oder zur Anbringung des Dichtungselements ausgebildet sein. Für den Fall, dass das zweite Filterelement das Dichtungselement aufweist oder trägt, kann das Stützrohr als Gegenkontur zur Herstellung einer dichten Verbindung zwischen den beiden Filterelementen ausgebildet sein.

Gemäß einer günstigen Ausgestaltung kann der Bereich an einem Innenrand der zweiten Endscheibe des ersten Filterelements angeordnet sein, der gegen eine Dichtfläche an einer in radialer Richtung äußeren Umfangsfläche eines an der Abdeckung angeordneten umlaufenden Vorsprungs abdichtet, der sich in axialer Richtung von der Abdeckung weg erstreckt. Insbesondere kann ein in axialer Richtung weisender Bund am zweiten Gehäuseteil in eine Nut der zweiten Endscheibe eingreifen. Vorteilhaft kann die Endscheibe durch das Gehäuse gestützt werden, so dass eine zuverlässige Anlage der Endscheibe, welche das Dichtungselement bildet, an der Dichtfläche des zweiten Filterelements gewährleistet werden kann.

Gemäß einer günstigen Ausgestaltung kann der Bereich der zweiten Endscheibe des ersten Filterelements gegen eine Dichtfläche eines an einer Innenseite an der Abdeckung angeordneten umlaufenden Vorsprungs in radialer Richtung abdichten, der sich in axialer Richtung von der Abdeckung weg erstreckt, wobei der Stutzen in eine Nut in der Endscheibe eingreifen kann. Insbesondere kann ein Innenrand der zweiten Endscheibe des ersten Filterelements von einem in axialer Richtung nach innen weisenden Steg am zweiten Gehäuseteil in radialer Richtung abgestützt sein. Es kann eine stabile Halterung der Endscheibe, welche das Dichtungselement der Dichtungsschnittstelle bildet, gewährleistet werden.

Gemäß einer günstigen Ausgestaltung kann der Bereich an einem Innenrand der zweiten Endscheibe des ersten Filterelements angeordnet sein, der gegen eine Dichtfläche an einer in radialer Richtung äußeren Umfangsfläche eines an der Abdeckung angeordneten umlaufenden Vorsprungs abdichtet, der sich in axialer Richtung von der Abdeckung weg erstreckt. Die Endscheibe kann im Bereich, der die Dichtfläche des zweiten Filterelements kontaktiert bzw. berührt, einen axialen Überstand aufweisen, um eine große Dichtfläche zu ermöglichen.

Gemäß einer günstigen Ausgestaltung kann der Bereich an einer in axialer Richtung nach innen weisenden Stirnfläche eines innerhalb des Querschnitts des Filtermediums umlaufenden radialen Überstands der zweiten Endscheibe des ersten Filterelements angeordnet sein, der gegen eine Dichtfläche an einer Stirnseite der Abdeckung abdichtet. Insbesondere kann das Stützrohr einen in radialer Richtung nach innen weisenden umlaufenden Rand aufweisen, der in den radialen Überstand eingebettet sein kann, was eine stabile Stützung der Dichtungsschnittstelle erlaubt. Gemäß einer günstigen Ausgestaltung kann eine Stirnfläche des zweiten Gehäuseteils nach innen gewölbt sein. Es kann sichergestellt werden, dass nur geeignete Filterelemente in das Gehäuse eingesetzt werden.

Gemäß einer günstigen Ausgestaltung kann die Stirnfläche des zweiten Gehäuseteils eine Öffnung aufweisen, welche sich zumindest teilweise über die Stirnseite des zweiten Filterelements erstreckt. Bei eingebautem zweitem Filterelement ist die Öffnung durch die stirnseitige Abdeckung des Filterelements abgedeckt. Die Abdichtung erfolgt über zumindest abschnittsweise konzentrische Dichtstellen an mindestens zwei der Bauteile erstes Filterelement, zweites Filterelement und zweites Gehäuseteil. Durch die Öffnung kann sichergestellt werden, dass nur geeignete Filterelemente in das Gehäuse eingesetzt werden. Es ist eine optische Prüfung möglich, ob ein geeignetes zweites Filterelement eingesetzt ist, ohne das Gehäuse zu öffnen. Durch die Materialersparnis beim Gehäuse kann Gewicht eingespart werden.

Ein Filterelement wird für das erfindungsgemäße Filtersystem vorgeschlagen, aufweisend ein, insbesondere zickzackförmig gefaltetes, zu einem Hohlkörper geformtes Filtermedium, eine erste an einer Stirnseite angeordnete Endscheibe und eine zweite an der gegenüberliegenden Stirnseite angeordnete Endscheibe, wobei die beiden Endscheiben jeweils eine zentrische Öffnung aufweisen und sich im Wesentlichen ringförmig über die Stirnseiten - im Falle eines gefalteten Filtermediums über die Falten - des Filtermediums erstrecken, wobei an der Stirnseite, welche im Einbauzustand bestimmungsgemäß einem reinluftseitigen Auslass gegenüberliegt, eine Dichtfläche oder ein Bereich eines Dichtungselements einer Dichtungsschnittstelle angeordnet ist. Das Filterelement ist vorzugsweise zylindrisch, insbesondere kreiszylindrisch ausgebildet, kann aber auch konisch ausgebildet sein.

Vorteilhaft kann das Filterelement ein Hauptelement im Filtersystem sein. Das Hauptelement kann mit dem zweiten Filterelement, vorzugsweise einem Sekundärelement, über die Dichtungsschnittstelle fluiddicht verbunden sein. Beispielsweise kann die Endscheibe aus einem geschäumten Polymer, insbesondere aus einem Polyurethan, gebildet sein. Der Aufbau des Filterelements ist kompakt und erspart zusätzliche Bauteile zur Abdichtung. Der Einbau in das Filtersystem kann vereinfacht werden.

Gemäß einer günstigen Ausgestaltung kann das Filtermedium um ein Stützrohr angeordnet sein, wobei das Stützrohr die Dichtfläche aufweist. Das Stützrohr kann bei der Herstellung zur Ausbildung der Dichtfläche als Gegenkontur zu einem Dichtungselement geeignet ausgebildet werden. Alternativ kann das Stützrohr zur Anbringung eines Dichtungselements und/oder zur Versteifung eines weichen Dichtungselements ausgebildet sein. Das Stützrohr kann einen sich nach radial innen erstreckenden Rand aufweisen, an welchem die Dichtfläche angeordnet ist. Insbesondere bildet ein nach axial innen gerichteter Abschnitt des Rands die Dichtfläche.

Gemäß einer günstigen Ausgestaltung kann die Endscheibe an der Stirnseite, welche im Einbauzustand bestimmungsgemäß einem reinluftseitigen Auslass gegenüberliegt, den dichtungselementseitigen Bereich der Dichtungsschnittstelle aufweisen. Die Endscheibe kann sich vorteilhaft ringförmig nach radial innen über das Filtermedium hinweg erstrecken. Dieser ringförmige radial innen liegende Bereich kann das Dichtungselement der Dichtungsschnittstelle bilden. In Ausführungsformen weist dieser Bereich eine Nut auf, welche mit der Dichtfläche des Gegenstücks der Dichtungsschnittstelle zusammenwirkt.

Im Filtersystem, in dem das Filterelement eingesetzt ist, kann bei dieser Ausführungsform vorteilhaft zusätzlich Gewicht eingespart werden, da hierdurch die Endscheibe des äußeren Filterelements nicht geschlossen ausgeführt werden muss. Durch die Öffnung im Boden des äußeren Filterelements kann Endscheibenmaterial eingespart werden.

Ein weiteres Filterelement wird für das erfindungsgemäße Filtersystem vorgeschlagen, bestehend aus einem einlagig oder mehrlagig auf einem Stützrohr angeordneten Filtermedium, einem ersten an einer Stirnseite angeordneten umlaufenden, in axiale Richtung weisenden Stutzen und einer zweiten an der gegenüberliegenden Stirnseite angeordneten Abdeckung, wobei die Abdeckung wenigstens eine Dichtfläche oder wenigstens ein Dichtungselement aufweist, welche oder welches im Einbauzustand bestimmungsgemäß eine Dichtungsschnittstelle mit einem anderen Filterelement bildet. Das Filtermedium kann um das Stützrohr herumgewickelt sein oder zickzackförmig gefaltet und zu einem das Stützrohr umschließenden Hohlkörper geformt sein.

Vorteilhaft kann das Filterelement ein Sekundärelement im Filtersystem sein. Das Sekundärelement kann mit dem ersten Filterelement, vorzugsweise einem Hauptelement, über die Dichtungsschnittstelle fluiddicht verbunden sein. Das Filterelement ist vorzugsweise zylindrisch, insbesondere kreiszylindrisch, kann aber auch konisch ausgebildet sein.

Alternativ oder zusätzlich kann das Filterelement zur Schadgas-Adsorption ausgebildet sein und mit einem als Partikelfilterelement über die Dichtungsschnittstelle fluiddicht verbunden sein. Zur Schadgas-Adsorption weist das Filterelement ein entsprechend geeignetes Filtermedium auf, insbesondere ein aktivkohlehaltiges Filtermedium.

Gemäß einer günstigen Ausgestaltung kann an der Abdeckung ein umlaufender Vorsprung angeordnet sein, der sich in axialer Richtung von der Abdeckung weg erstreckt, wobei der umlaufende Vorsprung ein Dichtungselement tragen kann. Vorteilhaft kann der Vorsprung in das Dichtungselement eingebettet sein. Beispielsweise kann das Dichtungselement aus einem geschäumten Polymer, insbesondere aus einem Polyurethan, oder aus einem Thermoplast gebildet sein. Es ist auch möglich, dass der Vorsprung selbst aus einem geschäumten Polymer besteht und das Dichtungselement bildet, insbesondere für den Fall, dass das zweite Filterelement als Faltenbalg mit geschäumten Endscheiben ausgeführt ist. Der Vorsprung ist dann einfach einteilig mit der Endscheibe herstellbar.

Gemäß einer günstigen Ausgestaltung kann an einer Kante der Abdeckung oder des Stützrohrs ein Dichtungselement angeordnet sein. Vorteilhaft kann an der Kante ein geschäumtes Polymer, insbesondere ein Polyurethan, oder ein Thermoplast angeordnet sein.

Gemäß einer günstigen Ausgestaltung kann ein in axialer Richtung nach außen weisender umlaufender Vorsprung an der Abdeckung als Dichtfläche der Dichtungsschnittstelle angeordnet sein. Der Vorsprung kann in geeigneter Weise ausgestaltet werden, um eine Dichtfläche oder Dichtschnittstelle auszubilden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: ein Filtersystem nach einem Ausführungsbeispiel der Erfindung in einer Schnittdarstellung;
- Fig. 2: einen Ausschnitt aus einem Filtersystem nach einem Ausführungsbeispiel der Erfindung in einer Schnittdarstellung mit einer radialen Abdichtung zwischen erstem und zweitem Filterelement;
- Fig. 3: einen Ausschnitt aus einem Filtersystem nach einem weiteren Ausführungsbeispiel der Erfindung in einer Schnittdarstellung mit einer radialen Abdichtung zwischen erstem und zweitem Filterelement;
- Fig. 4: einen Ausschnitt aus dem Filtersystem in Figur 1 in einer Schnittdarstellung mit einer axialen Abdichtung zwischen erstem und zweitem Filterelement;
- Fig. 5: einen Ausschnitt aus einem Filtersystem nach einem weiteren Ausführungsbeispiel der Erfindung in einer Schnittdarstellung mit einer radialen Abdichtung zwischen einem zweiten Filterelement und einer Endscheibe eines ersten Filterelements;
- Fig. 6: einen Ausschnitt aus einem Filtersystem nach einem weiteren Ausführungsbeispiel der Erfindung in einer Schnittdarstellung mit einer radialen Abdichtung zwischen einem ersten und zweiten Filterelement;
- Fig. 7: einen Ausschnitt aus einem Filtersystem nach einem weiteren Ausführungsbeispiel der Erfindung in einer Schnittdarstellung mit einer radialen Abdichtung zwischen einem ersten und zweiten Filterelement;
- Fig. 8: einen Ausschnitt aus einem Filtersystem nach einem weiteren Ausführungsbeispiel der Erfindung in einer Schnittdarstellung mit einer axialen Abdichtung zwischen einem ersten und zweiten Filterelement;
- Fig. 9: ein Filtersystem nach einem weiteren Ausführungsbeispiel in einer Schnittdarstellung und
- Fig. 10: einen Ausschnitt aus dem Ausführungsbeispiel nach Figur 9 in einer Schnittdarstellung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

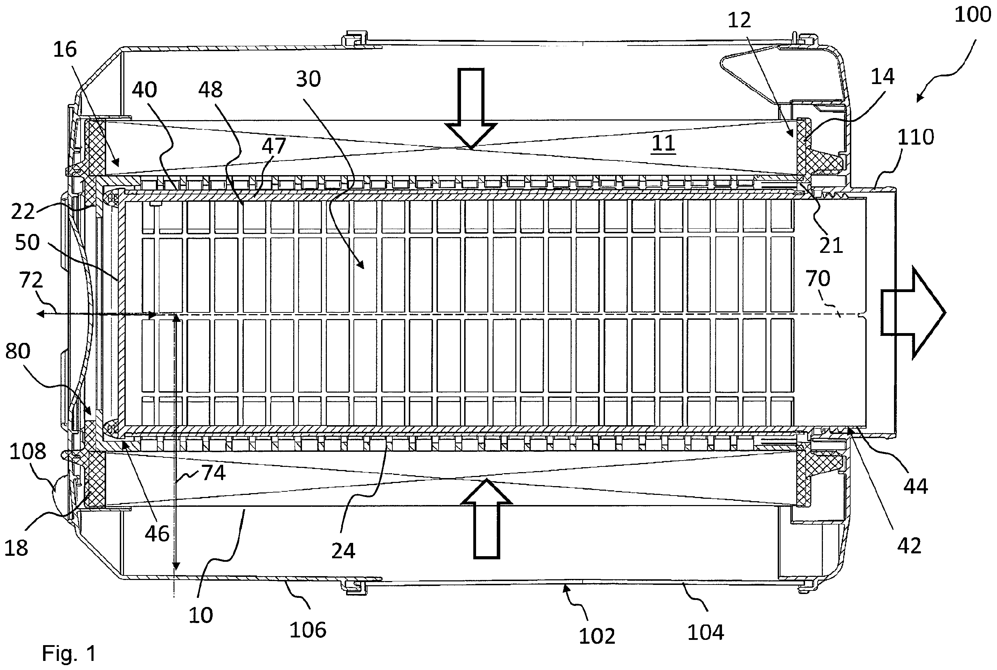

Bei den Ausführungsformen in Figuren 1 bis 4 weist eine Dichtungsschnittstelle 80 ein Dichtungselement 60, 62, 64 an der Abdeckung 50 des zweiten Filterelements 40 und eine Dichtfläche 25 an einem Stützrohr 24 des ersten Filterelements 10 auf.

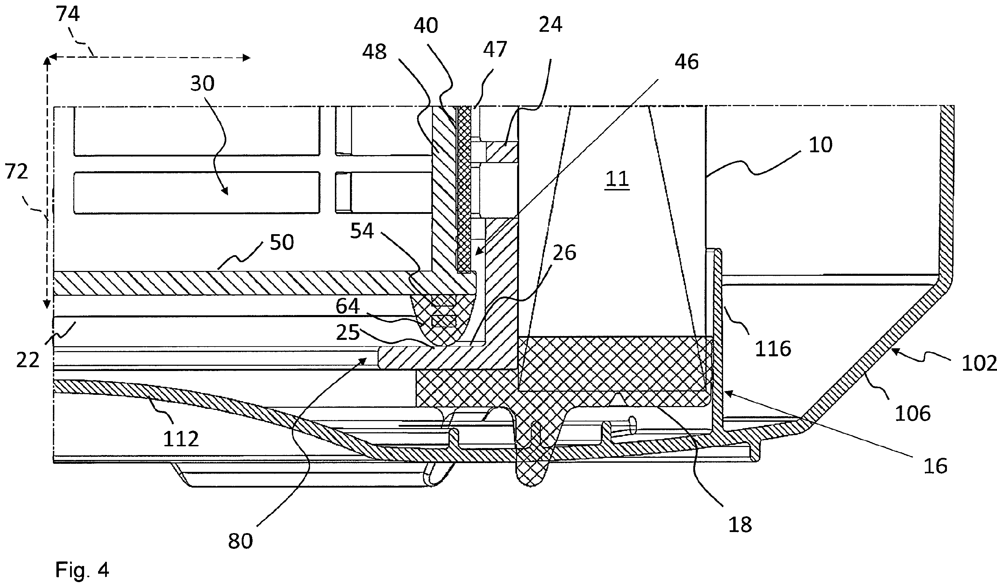

Figuren 1 und 4 zeigen ein Filtersystem 100 nach einem ersten Ausführungsbeispiel der Erfindung, wobei Figur 1 eine Ansicht eines Längsschnitts durch das Filtersystem 100 und Figur 4 einen Ausschnitt aus dem Filtersystem 100 in Figur 1 zeigt. Das Filtersystem 100 ist beispielsweise ein Luftfiltersystem, insbesondere ein Luftfiltersystem für eine Brennkraftmaschine, bevorzugt ein Luftfiltersystem für eine Brennkraftmaschine eines Kraftfahrzeugs oder ein Kathodenluftfilter einer Brennstoffzelle eines Kraftfahrzeugs.

Das Filtersystem 100 umfasst ein Gehäuse 102 mit einem Einlass 108, der beispielsweise tangential am Gehäuse 102 angeordnet sein kann und in der Figur durch das Gehäuse 102 verdeckt ist, und einem zu einer Längsachse 70 koaxial angeordneten stutzenförmigen Auslass 110 für ein Fluid. Einlass 108 und Auslass 110 sind beispielsweise an gegenüberliegenden axialen Enden des Gehäuses 102 angeordnet. Das Gehäuse 102 umfasst ein erstes Gehäuseteil 104, beispielsweise einen Gehäusetopf, und ein zweites Gehäuseteil 106, beispielsweise einen Gehäusedeckel. Der Gehäusetopf kann fest montiert sein und der Gehäusedeckel von diesem abgezogen werden, um an das Gehäuseinnere zu gelangen.

In dem Gehäuse 102 ist ein erstes, hohlzylindrisch ausgebildetes Filterelement 10 koaxial zur Längsachse 70 angeordnet. In einem Innenraum 30 des ersten Filterelements 10 ist ein zweites Filterelement 40 koaxial zur Längsachse 70 und konzentrisch zum ersten Filterelement 10 angeordnet.

Die Längsachse des Gehäuses 102 fällt im dargestellten Ausführungsbeispiel mit der Längsachse des ersten Filterelements 10 und des zweiten Filterelements 40 zusammen, so dass hier nur auf eine einzige gemeinsame Längsachse 70 Bezug genommen wird. Es sind jedoch auch Ausführungsformen denkbar, in welchen das erste Filterelement 10 und das zweite Filterelement 40 konzentrisch zueinander um eine Längsachse angeordnet sind, welche von einer Längsachse des Filtergehäuses verschieden ist. In diesen Fällen wären die Filterelemente exzentrisch im Filtergehäuse angeordnet.

Das erste Filterelement 10, auch als Hauptelement 10 bezeichnet, weist ein Filtermedium 11 auf, das auf einem Stützrohr 24 angeordnet ist. Das erste Filterelement 10 weist eine erste, an einer auslassseitigen Stirnseite 12 angeordnete Endscheibe 14 und eine zweite, an der gegenüberliegenden Stirnseite 16 angeordnete Endscheibe 18 auf. Beide Endscheiben 14, 18 weisen jeweils eine Öffnung 21, 22 auf und erstrecken sich im Wesentlichen ringförmig über die jeweilige Stirnseite 14, 16 des Filtermediums 11. Das Filtermedium 11 ist beispielsweise zickzackförmig gefaltet. Die Öffnungen 21, 22 sind im dargestellten Ausführungsbeispiel koaxial zur Längsachse 70 angeordnet.

Das zweite Filterelement 40, auch als Sekundärelement 40 bezeichnet, weist ein Filtermedium 47 auf, das auf einem Stützrohr48 angeordnet ist. Beispielsweise ist das Filtermedium 47 einlagig oder mehrlagig auf das Stützrohr 48 aufgebracht. Das zweite Filterelement 40 weist eine auslassseitige erste Stirnseite 42 und eine der auslassseitigen Stirnseite 42 gegenüberliegende zweite Stirnseite 46 auf. Die erste Stirnseite 42 ist offen und weist einen Stutzen 44 auf, der mit dem ersten Gehäuseteil 104 am stutzenförmigen Auslass 110 verbunden ist, beispielsweise mit diesem über ein nicht näher bezeichnetes Außengewinde am Stutzen 44 des zweiten Filterelements 40 verschraubt ist.

Das zweite Filterelement 40 kann als Sicherheitselement beim Austausch des Hauptfilterelements 10 dienen, oder aber auch als Schadgas-Filterelement ausgebildet sein und Schadgase adsorbieren. Hierzu kann das Filtermedium 47 Aktivkohle aufweisen.

Die Strömungsrichtung des Fluids zwischen Einlass 108 und Auslass 110 durch beide Filterelemente 10, 40 ist durch breite Pfeile angedeutet. Die Filterelemente 10, 40 werden in radialer Richtung 74 von außen nach innen durchströmt. Das erste Filterelement 10 kann aus dem Gehäuse 102 herausgezogen werden, während das zweite Filterelement 40 nach wie vor mit dem zweiten Gehäuseteil 104 verbunden ist und den reinseitigen Auslass 110 vor ungefiltertem Fluid schützt.

Das zweite Filterelement 40 ist an seiner dem reinseitigen Auslass 110 gegenüberliegenden zweiten Stirnseite 46 mit einer Abdeckung 50 fluiddicht verschlossen. Das zweite Filterelement 40 verschließt die Öffnung 22 in der zweiten Endscheibe 18 fluiddicht mittels der Abdeckung 50. Zum fluiddichten Verschließen der Öffnung 22 ist zwischen der zweiten Stirnseite 16 des ersten Filterelements 10 und der zweiten Stirnseite 46 des zweiten Filterelements 40 eine Dichtungsschnittstelle 80 angeordnet. Die Abdeckung 50 und das Stützrohr 48 des zweiten Filterelements 40 sind vorzugsweise einstückig ausgebildet.

Die Dichtungsschnittstelle 80 umfasst an den dem reinseitigen Auslass 110 gegenüberliegenden stirnseitigen Bereichen der Filterelemente 10, 40 generell wenigstens eine Dichtfläche an einem der Filterelemente 10, 40 und wenigstens ein Dichtungselement an dem anderen der Filterelemente 10, 40. Das zweite Filterelement 40 verschließt die Öffnung 22 in der Endscheibe 18 des ersten Filterelements 10 fluiddicht, ohne dass zusätzliche Bauteile notwendig sind. Das Dichtungselement kann je nach Ausführung in axialer Richtung 72 oder in radialer Richtung 74 dichten.

In der in Figur 1 dargestellten Ausgestaltung, die in Figur 4 vergrößert dargestellt ist, ist die Dichtungsschnittstelle 80 mit einem ringförmigen Dichtungselement 64 an der Abdeckung 50 vorgesehen, sowie eine Dichtfläche 25 am Stützrohr 24 des ersten Filterelements 10. Die Abdeckung 50 und das Stützrohr 48 des zweiten Filterelements 40 sind vorzugsweise einstückig ausgebildet. Das Dichtungselement 64 ist an der Stirnseite 46 des zweiten Filterelements 40 an einem in axialer Richtung 72 nach außen weisenden umlaufenden Vorsprung 54 der Abdeckung 50 angeordnet. Der Vorsprung 54 ist in das Dichtungselement 64 eingebettet. Das Dichtungselement 64 bildet einen umlaufenden Ring auf der Abdeckung 50 und dichtet an der Dichtfläche 25 axial gegen einen sich in radialer Richtung 74 nach innen erstreckenden Rand 26 des Stützrohrs 24 ab. Der Rand 26 des Stützrohrs 24 sitzt auf der Endscheibe 18 auf.

Im zweiten Gehäuseteil 106 ist eine Aufnahme für das erste Filterelement 10 vorgesehen, so dass das erste Filterelement 10 im Bereich seiner zweiten Endscheibe 18 mit seiner Außenseite an einem das Filterelement 10 umgebenden Ring 116 anliegt. Das erste Filterelement 10 ist über nicht näher bezeichnete Abstütznoppen gegen den Boden des zweiten Gehäuseteils 106 abgestützt.

In der dargestellten Ausführung ist das zweite Gehäuseteil 106 im Bereich der Öffnung 22 der Endscheibe 18 mit einer Einbuchtung in der Stirnfläche 112 nach innen gewölbt. Die Einbuchtung ragt in die Öffnung 22 hinein.

Da der grundsätzliche Aufbau der Filterelemente 10, 40 und des Gehäuses 102 in den verschiedenen Ausführungsformen weitgehend gleich ist, wird zur Vermeidung unnötiger Wiederholungen in den weiteren Ausführungsbeispielen nur auf wesentliche Unterschiede bei der Dichtungsschnittstelle 80 eingegangen.

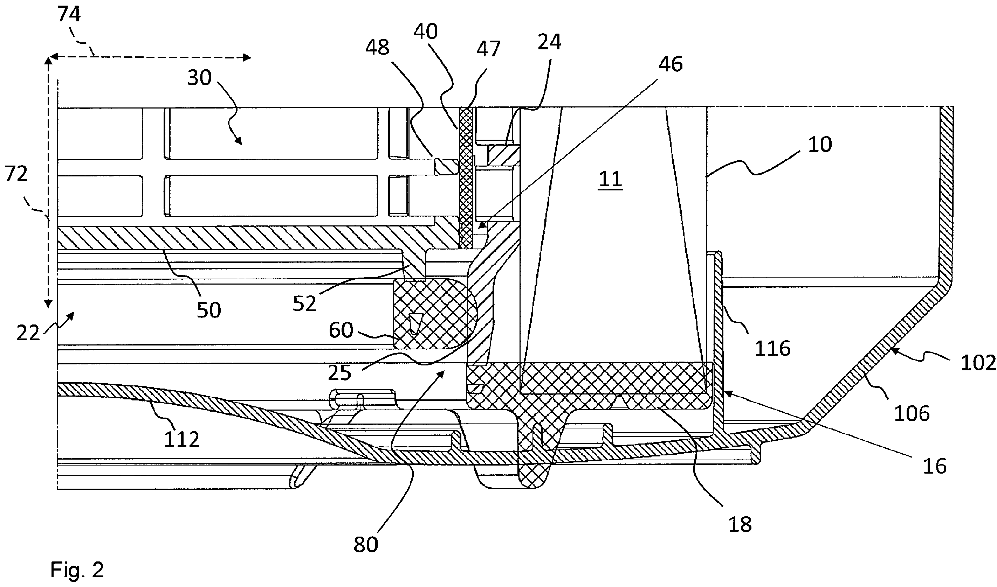

Figur 2 zeigt einen Ausschnitt aus einem Filtersystem 100 nach einem weiteren Ausführungsbeispiel der Erfindung in einer Schnittdarstellung mit einer Dichtungsschnittstelle 80 mit einer radialen Abdichtung zwischen erstem und zweitem Filterelement 10, 40.

Die Dichtungsschnittstelle 80 umfasst ein als Dichtring ausgebildetes Dichtungselement 60, das an einem umlaufenden Vorsprung 52 angeordnet ist, welcher an einer äußeren Stirnseite der Abdeckung 50 in axialer Richtung 72 von der Abdeckung 50 nach außen absteht und in das Dichtungselement 60 eingebettet ist. Das Dichtungselement 60 dichtet in radialer Richtung 74 gegen die Dichtfläche 25 am Stützrohr 24 des ersten Filterelements 10 ab. Das Stützrohr 24 weist im Bereich der Dichtfläche 25 des ersten Filterelements 10 eine Querschnittsverengung auf.

Das erste Filterelement 10 ist in einer Aufnahme im zweiten Gehäuseteil 106 aufgenommen und radial außen von einem Ring 116 umgeben. Der Boden des zweiten Gehäuseteils 106 weist wie zuvor eine Einbuchtung in der Stirnfläche 112 im Bereich der Öffnung 22 der Endscheibe 18 des ersten Filterelements 10 auf.

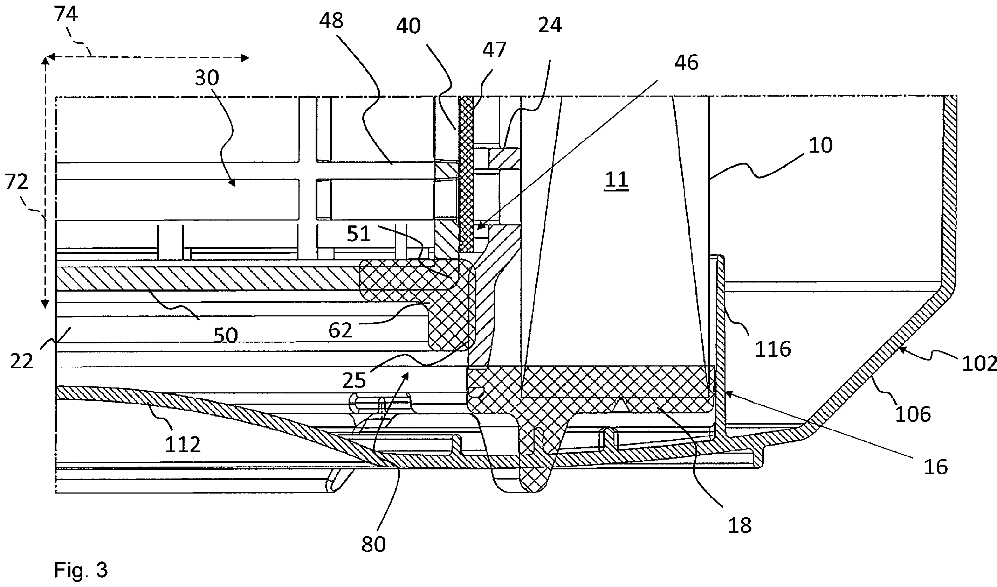

Figur 3 zeigt einen Ausschnitt aus einem Filtersystem 100 nach einem weiteren Ausführungsbeispiel der Erfindung in einer Schnittdarstellung mit einer Dichtungsschnittstelle 80 mit einer radialen Abdichtung zwischen erstem und zweitem Filterelement 10, 40.

Die Dichtungsschnittstelle 80 umfasst ein Dichtungselement 62, das an einer Kante 51 der Abdeckung 50 angeordnet ist und das in radialer Richtung 74 gegen ein Stützrohr 24 des ersten Filterelements 10 abdichtet. Das Dichtungselement 62 weist einen L-förmigen Querschnitt auf, mit einem in axialer Richtung 72 weisenden Schenkel und einem in radialer Richtung 74 nach innen weisenden Schenkel. Das Dichtungselement 62 kann angespritzt sein, oder die Kante 51 kann mit einem geschäumten Polymer eingefasst ein.

Das Stützrohr 24 weist im Bereich der Dichtfläche 25 des ersten Filterelements 10 eine Querschnittsverengung auf.

Das erste Filterelement 10 ist in einer Aufnahme im zweiten Gehäuseteil 106 aufgenommen und radial außen von einem Ring 116 umgeben. Der Boden des zweiten Gehäuseteils 106 weist wie zuvor eine Einbuchtung in der Stirnfläche 112 im Bereich der Öffnung 22 der Endscheibe 18 des ersten Filterelements 10 auf.

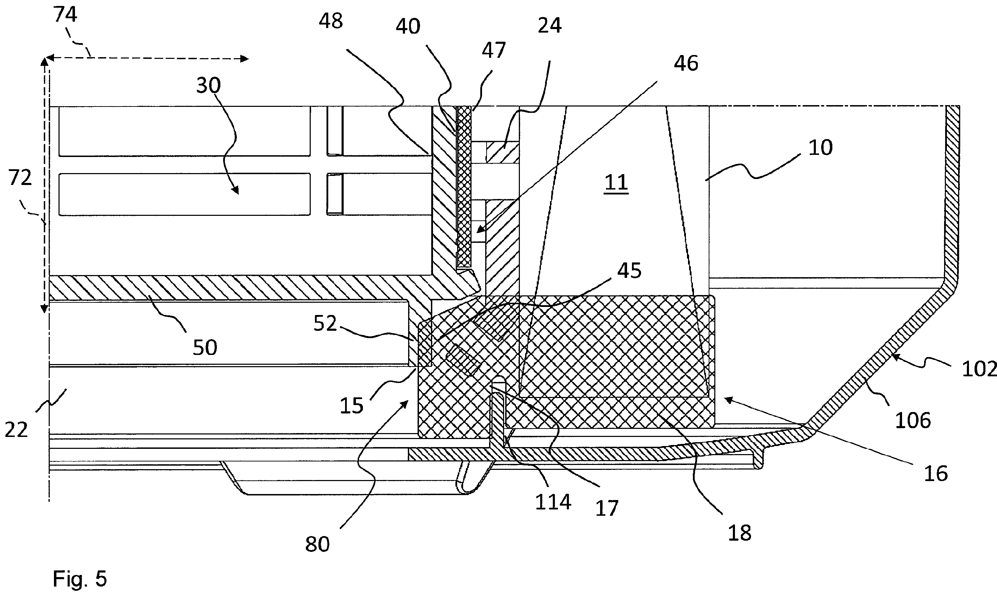

Bei den Ausführungsformen in Figuren 5 bis 8 weist die Dichtungsschnittstelle 80 einen Bereich 15 der zweiten Endscheibe 18 des ersten Filterelements 10 als Dichtungselement und eine Dichtfläche 45 am zweiten Filterelement 40 auf.

Figur 5 zeigt einen Ausschnitt aus einem Filtersystem 100 nach einem weiteren Ausführungsbeispiel der Erfindung in einer Schnittdarstellung mit einer radialen Abdichtung zwischen erstem und zweitem Filterelement 10, 40.

Der Bereich 15 ist an einem Innenrand der zweiten Endscheibe 18 des ersten Filterelements 10 angeordnet und dichtet gegen eine Dichtfläche 45 an einer in radialer Richtung 74 äußeren Umfangsfläche eines an der Abdeckung 50 angeordneten umlaufenden Vorsprungs 52 ab, der sich in axialer Richtung 72 von der Abdeckung 50 weg erstreckt. Ein in axialer Richtung 72 weisender Steg 114 greift am zweiten Gehäuseteil 106 in eine Nut 17 der zweiten Endscheibe 18 ein. Hierdurch wird die Endscheibe 18 durch das zweite Gehäuseteil 106 des Gehäuses 102 gestützt. Dadurch kann auf einen radial zum ersten Filterelement 10 angeordneten äußeren Ring 116 (Figuren 2, 3, 4) zur Aufnahme des ersten Filterelements 10 im zweiten Gehäuseteil 106 verzichtet werden.

In dieser Ausführungsform ist das zweite Gehäuseteils 106 im Bereich der Öffnung 22 in der zweiten Endscheibe 18 des ersten Filterelements 10 nicht gewölbt, sondern offen ausgestaltet, so dass die Abdeckung 50 von außen erkennbar ist.

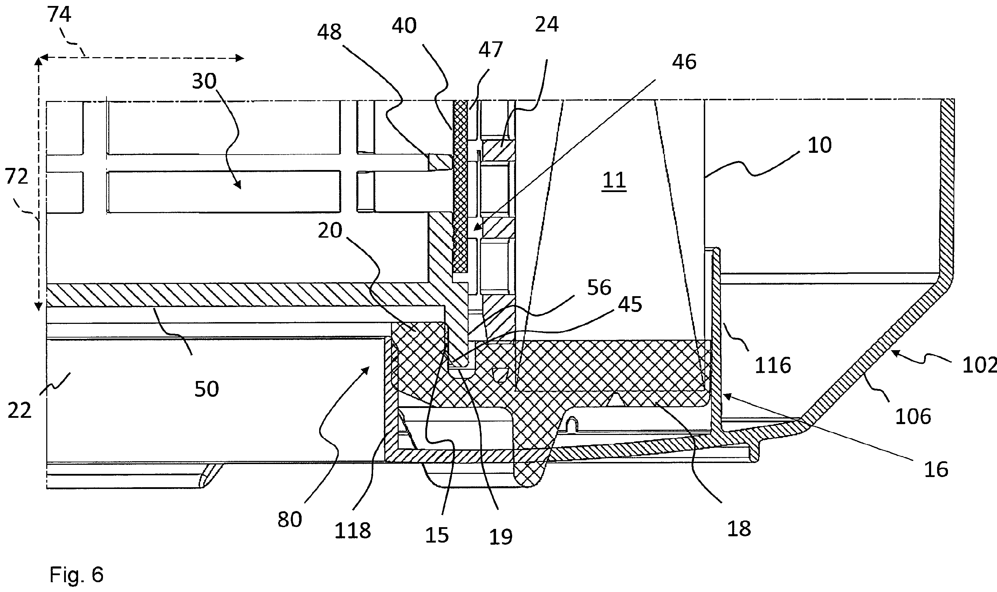

Figur 6 zeigt einen Ausschnitt aus einem Filtersystem 100 nach einem weiteren Ausführungsbeispiel der Erfindung in einer Schnittdarstellung mit einer radialen Abdichtung zwischen erstem und zweitem Filterelement 10, 40.

Der Bereich 15 der zweiten Endscheibe 18 des ersten Filterelements 10 dichtet gegen eine Dichtfläche 45 eines an einer Innenseite an der Abdeckung 50 angeordneten umlaufenden Vorsprungs 56 in radialer Richtung 74 ab. Der Vorsprung 56 erstreckt sich in axialer Richtung 72 von der Abdeckung 50 weg und ist am Außenrand der Abdeckung 50 angeordnet. Die Endscheibe 18 erstreckt sich mit einem radialen Überstand 20 über den Randbereich der Abdeckung 50. Der Vorsprung 56 greift in eine Nut 19 in dem radialen Überstand 20 der Endscheibe 18 ein. Der Innenumfang der zweiten Endscheibe 18 des ersten Filterelements 10 ist von einem in axialer Richtung 72 nach innen weisenden Steg 118 am zweiten Gehäuseteil 106 in radialer Richtung 74 abgestützt und zwischen dem Steg 118 und dem Ring 116 im zweiten Gehäuseteil 106 in radialer Richtung 74 gesichert.

Auch in dieser Ausführungsform ist das zweite Gehäuseteil 106 im Bereich der Öffnung 22 in der zweiten Endscheibe 18 des ersten Filterelements 10 nicht gewölbt, sondern offen ausgestaltet, so dass die Abdeckung 50 von außen erkennbar ist.

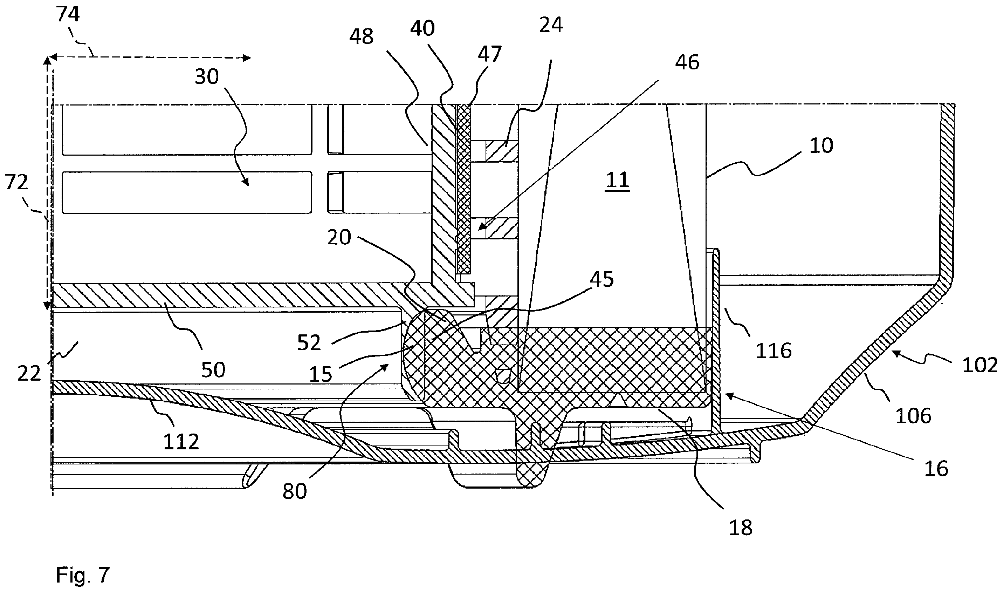

Figur 7 zeigt einen Ausschnitt aus einem Filtersystem 100 nach einem weiteren Ausführungsbeispiel der Erfindung in einer Schnittdarstellung mit einer radialen Abdichtung zwischen erstem und zweitem Filterelement 10, 40. Die Dichtungsschnittstelle 80 weist einen Bereich 15 an der zweiten Endscheibe 18 des ersten Filterelements 10 auf, welche einem reinseitigen Auslass 110 (Figur 1) gegenüberliegt, und umfasst wenigstens eine Dichtfläche 45 an dem zweiten Filterelement 40, an dem der Bereich 15 der zweiten Endscheibe 18 des ersten Filterelements 10 dichtend anliegt.

Die zweite Endscheibe 18 des ersten Filterelements 10 steht mit einem radialen Überstand 20 in radialer Richtung 74 nach innen über das Filtermedium 11 über.

Der Bereich 15 ist an einem Innenrand der zweiten Endscheibe 18 des ersten Filterelements 10 angeordnet, der gegen eine Dichtfläche 45 an einer in radialer Richtung 74 äußeren Umfangsfläche eines an der Abdeckung 50 angeordneten umlaufenden Vorsprungs 52 abdichtet, der sich in axialer Richtung 72 von der Abdeckung 50 nach außen weg erstreckt.

In diese Ausführungsform ist der Boden des zweiten Gehäuseteils 106 gewölbt, wobei eine Einbuchtung in der Stirnfläche 112 in die Öffnung 22 hineinragt. Das Filterelement 10 ist in einer Aufnahme am zweiten Gehäuseteil 106 aufgenommen und im Bereich seiner zweiten Endscheibe 18 von einem stützenden Ring 116 umgeben.

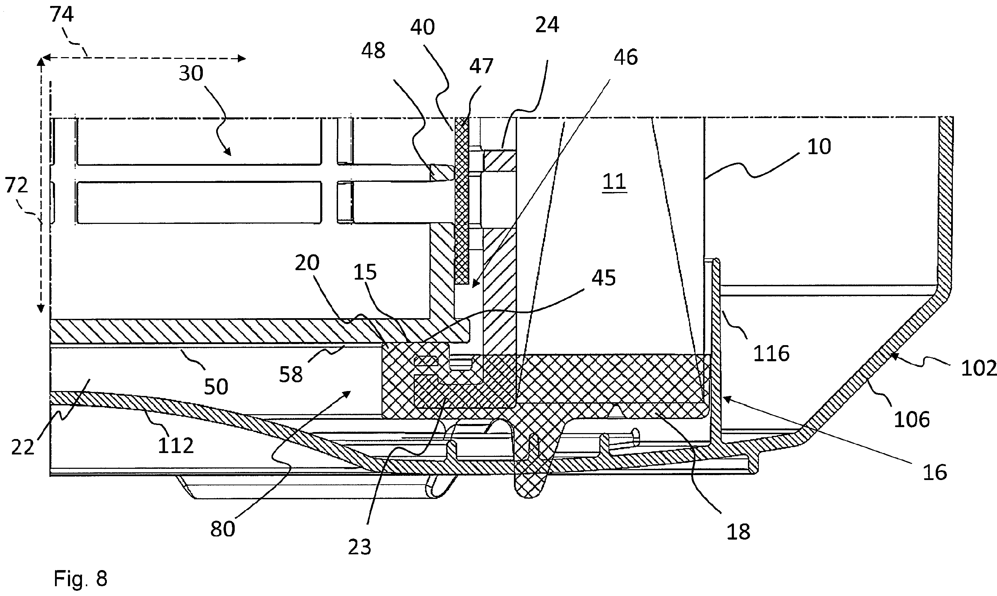

Figur 8 zeigt einen Ausschnitt aus einem Filtersystem 100 nach einem weiteren Ausführungsbeispiel der Erfindung in einer Schnittdarstellung mit einer axialen Abdichtung zwischen erstem und zweitem Filterelement 10, 40.

Der Bereich 15 ist an einer in axialer Richtung 72 nach innen weisenden Stirnfläche 58 eines innerhalb des Querschnitts des Filtermediums 11 umlaufenden radialen Überstands 20 der zweiten Endscheibe 18 des ersten Filterelements 10 angeordnet, der gegen eine Dichtfläche 45 an einer Stirnseite der Abdeckung 50 abdichtet. Das Stützrohr 24 weist einen in radialer Richtung 74 nach innen weisenden Rand 23 auf, der in den radialen Überstand 20 der zweiten Endscheibe 18 eingebettet ist und diesen hierdurch verstärkt. Die zweite Endscheibe 18 kann die Dichtungsschnittstelle 80 in diesem Bereich axial abstützen.

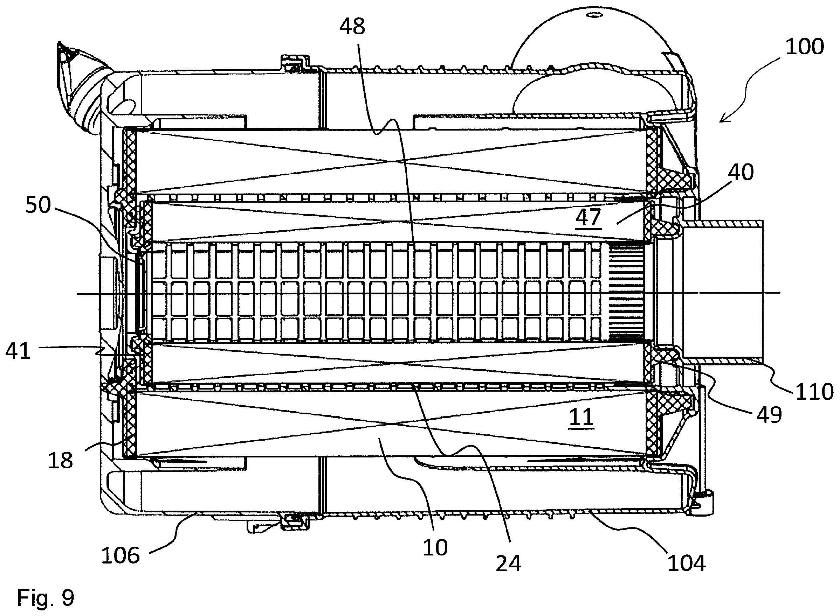

In Figur 9 ist ein weiteres Ausführungsbeispiel eines Filtersystems 100 dargestellt, wobei das innere Filterelement 40 ein Filtermedium 47 in Form eines Faltenbalgs aufweist, welcher um ein Stützrohr 48 herum angeordnet ist. An den Stirnseiten sind die offenen Falten jeweils mittels einer Endscheibe 41, 49 strömungsdicht verschlossen. Die Endscheiben 41, 49 sind vorzugsweise aus einem elastischen Material, insbesondere PUR-Schaum, gebildet. Die obere Endscheibe 49 ist eine offene ringförmige Endscheibe und weist einen umlaufenden Dichtungswulst auf, welcher gegen den Stutzen 110 abdichtet. Die untere Endscheibe 41 ist ebenfalls ringförmig ausgebildet und umschließt die Abdeckung 50 des Stützrohrs 48. Das Stützrohr 48 bzw. die Abdeckung 50 ist abschnittsweise in das Material der Endscheibe 41 eingebettet. Alternativ kann die Endscheibe 41 scheibenförmig ausgebildet sein und den vom Filterelement 40 umschlossenen Hohlraum stirnseitig abdecken, sodass die Abdeckung 50 als Teil des Stützrohrs 48 entfallen kann.

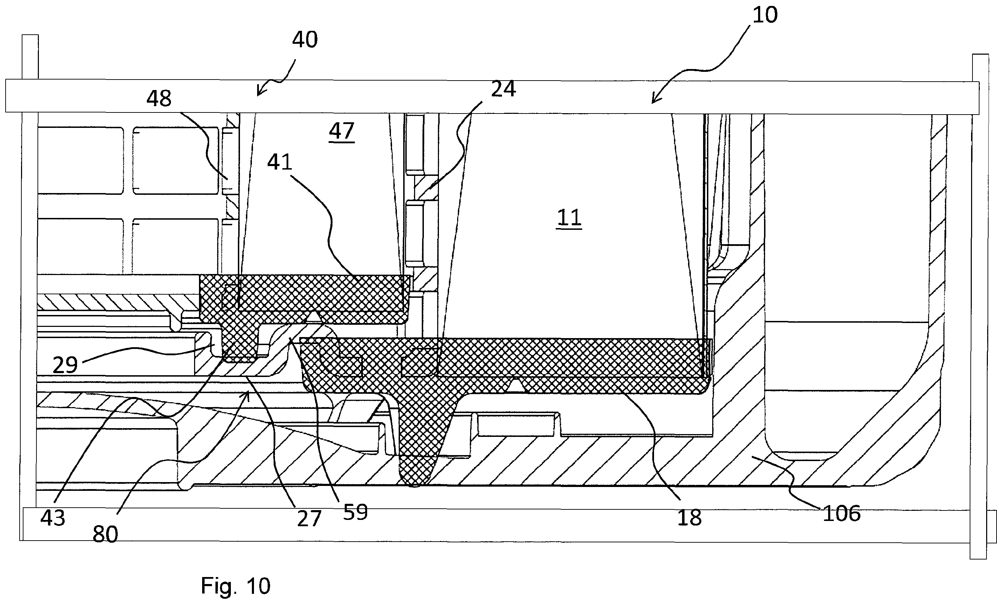

In Figur 10 ist ein Ausschnitt aus dem in Figur 9 dargestellten Filtersystem im Bereich der Dichtungsschnittstelle 80 der bodenseitigen Endscheiben 18, 41 dargestellt. Die beiden Filterelemente 10, 40 sind axial gegeneinander abgedichtet. Das Stützrohr 24 weist einen in radialer Richtung 74 nach innen weisenden ringförmigen Rand 27 auf, der abschnittsweise in das Material der Endscheibe 18 eingebettet ist. Radial innen weist der ringförmige Rand 27 eine Nut 29 auf, die in Richtung nach radial außen von einem ringförmigen Vorsprung 59 begrenzt ist. Diese Nut 29 dient der Aufnahme eines axial gerichteten ringförmigen Dichtungsvorsprungs 43 an der unteren Endscheibe 41 des inneren Filterelements 40. Der ringförmige Vorsprung 59 des Randes 27 liegt axial an der flachen axialen Stirnseite der Endscheibe 41 des inneren Filterelements 40 an. Durch diese Konfiguration ist eine zuverlässige axiale Abdichtung zwischen den beiden Filterelementen 10, 40 sichergestellt. Die untere Endscheibe 41 des inneren Filterelements 40 bildet gleichzeitig die Abdichtung der Falten und die Schnittstelle zum außen liegenden Filterelement 10, zusätzliche Dichtungselemente sind nicht erforderlich.

Das innere Filterelement 40 kann vorteilhaft ein Filterelement zur Schadgas-Adsorption sein. Hierzu ist das Filtermedium entsprechend zur Adsorption von Schadgasen geeignet ausgebildet. Vorzugsweise ist das Filtermedium aktivkohlehaltig.

Selbstverständlich sind auch weitere Dichtungskonfigurationen zur Abdichtung zweier als Faltenbalg ausgebildeten Filterelemente 10, 40 möglich. So kann beispielsweise ein radial äußerer Abschnitt der unteren Endscheibe 41 des inneren Filterelements 40 ähnlich dem Ausführungsbeispiel aus Figur 2 oder Figur 3 zur Ausbildung einer Radialdichtung gegen einen sich in axialer Richtung erstreckenden Rand des Stützrohrs 24 des äußeren Filterelements 10 dichten.

## Patentansprüche

1. Filtersystem (100) mit einem Gehäuse (102) mit einem Einlass (108) und einem Auslass (110) für ein Fluid, wobei in dem Gehäuse (102) ein erstes, als Hohlkörper ausgebildetes Filterelement (10) mit einem Filtermedium (11) und in einem Innenraum (30) des ersten Filterelements (10) ein zweites Filterelement (40) angeordnet ist, wobei das erste Filterelement (10) und das zweite Filterelement (40) koaxial und konzentrisch zueinander um eine Längsachse (70) angeordnet sind,
wobei das erste Filterelement (10) eine erste, an einer auslassseitigen Stirnseite (12) angeordnete Endscheibe (14) und eine zweite, an der gegenüberliegenden Stirnseite (16) angeordnete Endscheibe (18) aufweist, welche Endscheiben (14, 18) jeweils eine zentrale Öffnung (21, 22) aufweisen und sich im Wesentlichen ringförmig über die jeweilige Stirnseite (14, 16) des Filtermediums (11) erstrecken,
wobei das zweite Filterelement (40) eine auslassseitige erste Stirnseite (42) und eine der auslassseitigen Stirnseite (42) gegenüberliegende zweite Stirnseite (46) aufweist, die mit einer Abdeckung (50) fluiddicht verschlossen ist,
wobei die Öffnung (22) in der zweiten Endscheibe (18) durch die Abdeckung (50) fluiddicht verschlossen ist,
**dadurch gekennzeichnet, dass** zwischen der zweiten Stirnseite (16) des ersten Filterelements (10) und der zweiten Stirnseite (46) des zweiten Filterelements (40) eine Dichtungsschnittstelle (80) angeordnet ist, über welche die beiden Filterelemente (10, 40) unmittelbar gegeneinander abdichten.

2. Filtersystem nach Anspruch 1, wobei die Dichtungsschnittstelle (80) eine Dichtfläche (25) an einem, einem reinseitigen Auslass (110) gegenüberliegenden Stützrohr (24) des ersten Filterelements (10) und wenigstens ein am zweiten Filterelement (40) angeordnetes Dichtungselement (60, 62, 64) umfasst, das gegen die Dichtfläche (25) in axialer und/oder radialer Richtung (72, 74) dichtet.

3. Filtersystem nach Anspruch 1 oder 2, wobei die Dichtungsschnittstelle (80) ein Dichtungselement (60) umfasst, insbesondere einen Dichtring, das an einem umlaufenden Vorsprung (52) angeordnet ist, welcher an einer äußeren Stirnseite der Abdeckung (50) in axialer Richtung (72) von der Abdeckung (50) absteht, wobei das Dichtungselement (60) in radialer Richtung (74) gegen ein Stützrohr (24) des ersten Filterelements (10) abdichtet.

4. Filtersystem nach Anspruch 1 oder 2, wobei die Dichtungsschnittstelle (80) ein Dichtungselement (62) umfasst, das an einer umlaufenden Kante (51) der Abdeckung (50) angeordnet ist und das in radialer Richtung (74) gegen ein Stützrohr (24) des ersten Filterelements (10) abdichtet.

5. Filtersystem nach Anspruch 1 oder 2, wobei die Dichtungsschnittstelle (80) an der Stirnseite (46) des zweiten Filterelements (40), insbesondere an der Abdeckung (50), ein Dichtungselement (64), insbesondere einen Dichtring oder einen Dichtungsvorsprung (43), umfasst, der in axialer Richtung (72) gegen einen in radialer Richtung (74) nach innen weisenden Rand (26, 29) des Stützrohrs (24) des ersten Filterelements (10) abdichtet.

6. Filtersystem nach Anspruch 1, wobei die Dichtungsschnittstelle (80) einen Bereich (15) der zweiten Endscheibe (18) des ersten Filterelements (10), welche einem reinseitigen Auslass (110) in axialer Richtung (72) gegenüberliegt, und wenigstens eine Dichtfläche (45) an dem zweiten Filterelement (40) umfasst.

7. Filtersystem nach Anspruch 6, wobei die zweite Endscheibe (18) des ersten Filterelements (10), in radialer Richtung (74) nach innen über das Filtermedium (11) übersteht.

8. Filtersystem nach einem der Ansprüche 6 oder 7, wobei der Bereich (15) an einem Innenrand der zweiten Endscheibe (18) des ersten Filterelements (10) angeordnet ist, der gegen eine Dichtfläche (45) an einer in radialer Richtung (74) äußeren Umfangsfläche eines an der Abdeckung (50) angeordneten umlaufenden Vorsprungs (52) abdichtet, der sich in axialer Richtung (72) von der Abdeckung (50) weg erstreckt, insbesondere wobei ein in axialer Richtung (72) weisender Steg (114) am zweiten Gehäuseteil (106) in eine Nut (17) der zweiten Endscheibe (18) eingreift.

9. Filtersystem nach einem der Ansprüche 6 oder 7, wobei der Bereich (15) der zweiten Endscheibe (18) des ersten Filterelements (10) gegen eine Dichtfläche (45) eines an einer Innenseite an der Abdeckung (50) angeordneten umlaufenden Vorsprungs (52) in radialer Richtung (74) abdichtet, der sich in axialer Richtung (72) von der Abdeckung (50) weg erstreckt, wobei der Vorsprung (52) in eine Nut (19) in der Endscheibe (18) eingreift, insbesondere wobei ein Innenrand der zweiten Endscheibe (18) des ersten Filterelements (10) von einem in axialer Richtung (72) nach innen weisenden Steg (118) am zweiten Gehäuseteil (106) in radialer Richtung (74) abgestützt ist.

10. Filtersystem nach einem der Ansprüche 6 oder 7, wobei der Bereich (15) an einem Innenrand der zweiten Endscheibe (18) des ersten Filterelements (10) angeordnet ist, der gegen eine Dichtfläche (45) an einer in radialer Richtung (74) äußeren Umfangsfläche eines an der Abdeckung (50) angeordneten umlaufenden Vorsprung (52) abdichtet, der sich in axialer Richtung (72) von der Abdeckung (50) weg erstreckt.

11. Filtersystem nach einem der Ansprüche 6 oder 7, wobei der Bereich (15) an einer in axialer Richtung (72) nach innen weisenden Stirnfläche (58) eines innerhalb des Querschnitts des Filtermediums (11) umlaufenden radialen Überstands (20) der zweiten Endscheibe (18) des ersten Filterelements (10) angeordnet ist, der gegen eine Dichtfläche (45) an einer Stirnseite der Abdeckung (50) abdichtet, insbesondere wobei das Stützrohr (24) einen in radialer Richtung (74) nach innen weisenden umlaufenden Rand (23) aufweist, der in den radialen Überstand (20) eingebettet ist.

12. Filtersystem nach einem der einem der vorhergehenden Ansprüche, wobei eine Stirnfläche (112) des zweiten Gehäuseteils (106) nach innen gewölbt ist.

13. Filtersystem nach einem der einem der vorhergehenden Ansprüche, wobei die Stirnfläche (112) des zweiten Gehäuseteils (106) eine Öffnung aufweist, welche sich zumindest teilweise über die zweite Stirnseite (46) des zweiten Filterelements (40) erstreckt.

## Claims

1. A filter system (100) with a housing (102) with an inlet (108) and an outlet (110) for a fluid, wherein a first filter element (10) designed as a hollow body with a filter medium (11) is disposed in the housing (102) and a second filter element (40) disposed in an interior space (30) of the first filter element (10), wherein the first filter element (10) and the second filter element (40) are disposed coaxially and concentrically to each other around a longitudinal axis (70), wherein the first filter element (10) features a first end plate (14) disposed on an outlet-sided front face (12) and a second end plate (18) disposed on the opposite front face (16), which end plates (14, 18) each feature a central opening (21, 22) and extend substantially annularly over the respective front face (14, 16) of the filter medium (11),
wherein the second filter element (40) features an outlet-sided first front face (42) and a second end face (46) opposite the outlet-sided front face (42), which is sealed in a fluid-tight manner with a cover (50),
wherein the opening (22) in the second end plate (18) is sealed in a fluid-tight manner by the cover (50),
**characterized in that** a sealing interface (80) is disposed between the second front face (16) of the first filter element (10) and the second front face (46) of the second filter element (40), via which the two filter elements (10, 40) seal directly against each other.

2. The filter system according to claim 1, wherein the sealing interface (80) comprises a sealing surface (25) on a support tube (24) of the first filter element (10) opposite a clean-sided outlet (110) and at least one sealing element (60, 62, 64) disposed on the second filter element (40), which seals against the sealing surface (25) in the axial and/or radial direction (72, 74).

3. The filter system according to claim 1 or 2, wherein the sealing interface (80) comprises a sealing element (60), in particular a gasket, which is arranged on a circumferential projection (52) which protrudes from the outer front face of the cover (50) in the axial direction (72) of the cover (50), wherein the sealing element (60) seals against a support tube (24) of the first filter element (10) in the radial direction (74).

4. The filter system according to claim 1 or 2, wherein the sealing interface (80) comprises a sealing element (62), which is disposed on a circumferential edge (51) of the cover (50) and which seals against a support tube (24) of the first filter element (10) in the radial direction (74).

5. The filter system according to claim 1 or 2, wherein the sealing interface (80) on the front face (46) of the second filter element (40), in particular on the cover (50), comprises a sealing element (64), in particular a gasket or a sealing projection (43), which seals in the axial direction (72) against an edge (26, 29) of the support tube (24) of the first filter element (10) pointing inwards in the radial direction (74).

6. The filter system according to claim 1, wherein the sealing interface (80) comprises a region (15) of the second end plate (18) of the first filter element (10), which is opposite a clean-sided outlet (110) in the axial direction (72), and at least one sealing surface (45) on the second filter element (40).

7. The filter system according to claim 6, wherein the second end plate (18) of the first filter element (10) protrudes inwardly in the radial direction (74) beyond the filter medium (11).

8. The filter system according to one of the claims 6 or 7, wherein the region (15) is disposed at an inner edge of the second end plate (18) of the first filter element (10), which seals against a sealing surface (45) on a circumferential surface (74) of a circumferential projection (52) disposed on the cover (50), which projection extends in an axial direction (72) away from the cover (50), in particular wherein a web (114) pointing in the axial direction (72) engages in a groove (17) of the second end plate (18) at the second housing component (106).

9. The filter system according to one of the claims 6 or 7, wherein the region (15) of the second end plate (18) of the first filter element (10) seals against a sealing surface (45) of a circumferential projection (52) disposed on an interior side of the cover (50) in the radial direction (74), which projection extends away from the cover (50) in the axial direction (72), wherein the projection (52) engages in a groove (19) in the end plate (18), in particular wherein an inner edge of the second end plate (18) of the first filter element (10) is supported in the axial direction (72) by a web (118) on the second housing component (106) in the radial direction (74).

10. The filter system according to one of the claims 6 or 7, wherein the region (15) is disposed at an inner edge of the second end plate (18) of the first filter element (10), which seals against a sealing surface (45) on a circumferential surface (74) of a circumferential projection (52) disposed on the cover (50), which projection extends in an axial direction (72) away from the cover (50).

11. The filter system according to one of the claims 6 or 7, wherein the region (15) is disposed on a front face (58) pointing inward in an axial direction (72) of a radial overhang (20) of the second end plate (18) of the first filter element (10) that extends within the cross-section of the filter medium (11), which seals against a sealing surface (45) on a front face of the cover (50). in particular wherein the support tube (24) features a circumferential edge (23) pointing inward in the radial direction (74), which is embedded in the radial overhang (20).

12. The filter system according to one of the preceding claims, wherein a front face (112) of the second housing component (106) is curved inward.

13. The filter system according to one of the preceding claims, wherein the front face (112) of the second housing component (106) features an opening which extends at least partially over the second front face (46) of the second filter element (40).

## Revendications

1. Système de filtre (100) avec un boîtier (102) avec une entrée (108) et une sortie (110) pour un fluide, un premier élément filtrant (10) réalisé en tant que corps creux et doté d'un milieu filtrant (11) étant disposé dans le boîtier (102) et un deuxième élément filtrant (40) étant disposé dans un espace intérieur (30) du premier élément filtrant (10), le premier élément filtrant (10) et le deuxième élément filtrant (40) étant disposés de manière coaxiale et concentrique l'un par rapport à l'autre autour d'un axe longitudinal (70),
le premier élément filtrant (10) comportant un premier disque d'extrémité (14) disposé sur une face frontale (12) côté sortie et un deuxième disque d'extrémité (18) disposé sur la face frontale opposée (16), chacun de ces disques d'extrémité (14, 18) comportant une ouverture centrale (21, 22) et s'étendant essentiellement de manière annulaire au-dessus de la face frontale respective (14, 16) du milieu filtrant (11),
le deuxième élément filtrant (40) comportant une première face frontale (42) côte sortie et une deuxième face frontale (46) opposée à la face frontale côté sortie (42) qui est obturée de façon étanche aux fluides au moyen d'un recouvrement (50),
l'ouverture (22) située dans le deuxième disque d'extrémité (18) étant obturée de façon étanche aux fluides par le recouvrement (50),
**caractérisé en ce qu'**une interface d'étanchéité (80) est disposée entre la deuxième face frontale (16) du premier élément filtrant (10) et la deuxième face frontale (46) du deuxième élément filtrant (40), cette interface étanchant les deux éléments filtrants (10, 40) directement l'un par rapport à l'autre.

2. Système de filtre selon la revendication 1, l'interface d'étanchéité (80) comprenant une surface d'étanchéité (25) sur un tube de support (24) du premier élément filtrant (10) situé à l'opposé d'une sortie côté pur (110) et au moins un élément d'étanchéité (60, 62, 64) disposé sur un deuxième élément filtrant (40) et étanchant en sens axial et/ou radial (72, 74) par rapport à la surface d'étanchéité (25).

3. Système de filtre selon la revendication 1 ou 2, l'interface d'étanchéité (80) comprenant un élément d'étanchéité (60), en particulier une bague d'étanchéité qui est disposée sur un épaulement circulaire (52), lequel dépasse en sens axial (72) du recouvrement (50) sur une face frontale extérieure du recouvrement (50), l'élément d'étanchéité (60) étanchant en sens radial (74) par rapport à un tube de support (24) du premier élément filtrant (10).

4. Système de filtre selon la revendication 1 ou 2, l'interface d'étanchéité (80) comprenant un élément d'étanchéité (62) qui est disposé sur un bord circulaire (51) du recouvrement (50) et qui étanche en sens radial (74) par rapport à un tube de support (24) du premier élément filtrant (10).

5. Système de filtre selon la revendication 1 ou 2, l'interface d'étanchéité (80) comprenant un élément d'étanchéité (64), en particulier une bague d'étanchéité ou un épaulement d'étanchéité (43), sur la face frontale (46) du deuxième élément filtrant (40), en particulier sur le recouvrement (50), cet élément étanchant en sens axial (72) par rapport à un bord (26, 29) dirigé en sens radial (74) vers l'intérieur du tube de support (24) du premier élément filtrant (10).

6. Système de filtre selon la revendication 1, l'interface d'étanchéité (80) comprenant une zone (15) du deuxième disque d'extrémité (18) du premier élément filtrant (10), laquelle est opposée en sens axial (72) à une sortie côté pur (110), et au moins une surface d'étanchéité (45) sur le deuxième élément filtrant (40).

7. Système de filtre selon la revendication 6, le deuxième disque d'extrémité (18) du premier élément filtrant (10) dépassant en sens radial (74) vers l'intérieur du milieu filtrant (11).

8. Système de filtre selon l'une quelconque des revendications 6 ou 7, la zone (15) étant disposée sur un bord intérieur du deuxième disque d'extrémité (18) du premier élément filtrant (10), lequel étanche par rapport à une surface d'étanchéité (45) sur une surface circonférentielle extérieure en sens radial (74) d'un épaulement (52) circulaire disposé sur le recouvrement (50), et s'étendant en sens axial (72) à l'opposé du recouvrement (50), en particulier une nervure (114) orientée en sens axial (72) sur le deuxième composant de boîtier (106) s'engrenant dans une rainure (17) du deuxième disque d'extrémité (18).

9. Système de filtre selon l'une quelconque des revendications 6 ou 7, la zone (15) du deuxième disque d'extrémité (18) du premier élément filtrant (10) étanchant en sens radial (74) par rapport à une surface d'étanchéité (45) d'un épaulement (52) circulaire disposé sur une face intérieure du recouvrement (50) qui s'étend en sens axial (72) à l'opposé du recouvrement (50), l'épaulement (52) s'engrenant dans une rainure (19) du disque d'extrémité (18), en particulier un bord intérieur du deuxième disque d'extrémité (18) du premier élément filtrant (10) étant étayé en sens radial (74) par une nervure(118) orientée en sens axial (72) vers l'intérieur sur le deuxième composant de boîtier (106).

10. Système de filtre selon l'une quelconque des revendications 6 ou 7, la zone (15) étant disposée sur un bord intérieur du deuxième disque d'extrémité (18) du premier élément filtrant (10), lequel étanche par rapport à une surface d'étanchéité (45) sur une surface circonférentielle extérieure en sens radial (74) d'un épaulement (52) circulaire disposé sur le recouvrement (50), et s'étendant en sens axial (72) à l'opposé du recouvrement (50).

11. Système de filtre selon l'une quelconque des revendications 6 ou 7, la zone (15) étant disposée sur une face frontale (58) dirigée en sens axial (72) vers l'intérieur d'une saillie (20) radiale circulaire située dans la section du milieu filtrant (11) du deuxième disque d'extrémité (18) du premier élément filtrant (10) qui étanche par rapport à une surface d'étanchéité (45) sur une face frontale du recouvrement (50), en particulier le tube de support (24) présentant un bord (23) circulaire dirigé en sens radial (74) vers l'intérieur qui est incorporé dans la saillie radiale (20).

12. Système de filtre selon l'une quelconque des revendications précédentes, une face frontale (112) du deuxième composant de boîtier (106) étant cintrée vers l'intérieur.

13. Système de filtre selon l'une quelconque des revendications précédentes, la face frontale (112) du deuxième composant de boîtier (106) présentant une ouverture qui s'étend au moins en partie sur la deuxième face frontale (46) du deuxième élément filtrant (40).
